# EUROPEAN PATENT SPECIFICATION

(11) **EP 1 961 067 B1**
(45) Date of publication and mention of the grant of the patent: **17.02.2010**
(21) Application number: 06839340.4
(22) Date of filing: 12.12.2006
(51) Int. Cl.: H01M 8/12

(54) **FUEL CELL COMPONENT HAVING AN ELECTROLYTE DOPANT**
BRENNSTOFFZELLENKOMPONENTE MIT EINEM ELEKTROLYT-DOTIERUNGSSTOFF
COMPOSANT DE PILE A COMBUSTIBLE COMPORTANT UN DOPANT D'ELECTROLYTE

(30) Priority: 16.12.2005 US 305311; 01.03.2006 US 365464
(43) Date of publication of application: 27.08.2008
(73) Proprietor: Saint-Gobain Ceramics and Plastics, Inc., Worcester, MA 01615-0138 (US)
(72) Inventor: BROWN, Nancy, E., New Braintree, MA 01531 (US)
(74) Representative: Zimmermann & Partner
(86) International application number: PCT/US2006/047411
(87) International publication number: WO 2007/078734

(56) References cited:
- EP-A1- 0 902 493
- WO-A-00/30194
- MITTERDORFER A ET AL: "La2Zr2O7 formation and oxygen reduction kinetics of the La0.85Sr0.15MnyO3, O2(g) ?YSZ system" SOLID STATE IONICS, NORTH HOLLAND PUB. COMPANY. AMSTERDAM, NL, vol. 111, no. 3-4, 1 September 1998 (1998-09-01), pages 185-218, XP004146240 ISSN: 0167-2738 cited in the application
- M.J.HENEKA, E.IVERS-TIFFÉE: "Influence of high current cycling on the performance of SOFC single cells" PROCEEDINGS OF THE 26TH RISØ INTERNATIONAL SYMPOSIUM ON MATERIALS SCIENCE, September 2005 (2005-09), pages 215-222, XP002434341 Denmark ISSN: 0907-0079 ISBN: 87-550-3455-1
- SAN PING JIANG: "Activation, microstructure, and polarization of solid oxide fuel cell cathodes" JOURNAL OF SOLID STATE ELECTROCHEMISTRY ; CURRENT RESEARCH AND DEVELOPMENT IN SCIENCE AND TECHNOLOGY, SPRINGER-VERLAG, BE, vol. 11, no. 1, 29 November 2005 (2005-11-29), pages 93-102, XP019431444 ISSN: 1433-0768

## Description

### BACKGROUND

### Field of the Disclosure

The present invention generally relates to solid oxide fuel cells (SOFCs).

### Description of the Related Art

In pursuit of high-efficiency, environmentally friendly energy production, solid oxide fuel cell (SOFC) technologies have emerged as a potential alternative to conventional turbine and combustion engines. SOFCs are generally defined as a type of fuel cell in which the electrolyte is solid metal oxide (desirably non-porous or limited to closed porosity), in which O²⁻ is transported from the cathode to the cathode/electrolyte interface. Fuel cell technologies, and particularly SOFCs, typically have a higher efficiency and have lower CO and NOx emissions than traditional combustion engines. In addition, fuel cell technologies tend to be quiet and vibration-fee. Solid oxide fuel cells (SOFCs) have an advantage over other fuel cell varieties. For example, SOFCs may use fuel sources such as natural gas, propane, methanol, kerosene, and diesel, among others because SOFCs operate at high enough operating temperatures to allow for internal fuel reformation. However, challenges exist in reducing the cost of SOFC systems to be competitive with combustion engines and other fuel cell technologies. These challenges include lowering the cost of materials, improving degradation or life cycle, and improving operation characteristics such as current and power density.

In the context of long-term operational characteristics of SOFCs, conductivity degradation is a notable parameter that should be addressed to enable formation of commercially viable components. Generally, degradation of has been attributed to a variety of influences, such as changes in the crystalline structure, of the solid electrolyte, reaction of the electrolyte with impurities, as well as on-and-off cycling leading to cracks and flaws within the electrolyte layer. Lost conductivity, increases in resistivity, and degradation of contact surface also lead to a reduction in operating voltages and current densities, negatively impacting the performance of the fuel cell, including reduction of the power output. As a result of performance degradation, expensive fuel cell components are replaced more frequently, leading to higher overall energy costs.

It has been suggested that particular electrode compositions improve the lifetime of the SOFC by delaying the formation of conductivity limiting compositions. For example, an A-site deficient LSM cathode composition may slow the formation of LZO at the cathode/electrolyte interface. See, Mitterdorfer and Gauckler, "La2Zr2O7 formation and oxygen reduction kinetics of the La 0.85Sr 0.15MnyO3, O2(g)/YSZ system" Solid State Ionics, Elsevier Science (1998). See also, S.P. Jiang, "Issues on the development of (La,Sr)MnO3 cathod for solid oxide fuel cells" Journal of Power Sources, Elsevier (2003), available at, www.elsevier.com/locate/jpowsour. However, such compositions have only limited impact on attenuating the formation of LZO and the degredation of the fuel cell.

WO 00/30194 relates to an electrochemical cell, such as an SOFC, comprising a nickel based electrode such as in the form of an Ni/YSZ anode; to which Mn has been added.

M.J. Heneka & E. Ivers-Tiffée, Proceedings of the 26th Risø International Symposium on Materials Science, September 2005, pages 215-222 discloses a study on the performance of SOFCs under high current density load cycles. The experimental setup uses a fuel cell comprising a cathode comprising (La_{0.75}Sr_{0.2})MnO₃ and an electrolyte layer made of 10 mol% Sc₂O₃ 1 mol% CeO₂ stabilized ZrO₂.

As such, improvements are still needed as many typical fuel cell systems suffer from deficiencies in providing a low cost alternative to other energy sources. In view of the foregoing, it is considered generally desirable to provide improved SOFC designs suitable for use in demanding SOFC applications.

### BRIEF DESCRIPTION OF THE DRAWINGS

The present disclosure may be better understood, and its numerous features and advantages made apparent to those skilled in the art by referencing the accompanying drawings.

FIG. 1 is a cross-sectional-illustration of a fuel cell component in accordance with an embodiment disclosed herein.

FIG. 2 is a cross-sectional illustration of a fuel cell component in accordance with an embodiment disclosed herein.

FIG. 3 is a cross-sectional illustration of a fuel cell stack in accordance with an embodiment disclosed herein.

FIG. 4 illustrates an SOFC system in accordance with an embodiment disclosed herein.

The use of the same reference symbols in different drawings indicates similar or identical items.

### DESCRIPTION OF THE PREFERRED EMBODIMENT(S)

According to one aspect, a fuel cell component is provided that includes a cathode comprising a ceramic material, the ceramic material having an A-site deficient, perovskite crystal structure and comprising manganese. The fuel cell component further includes an anode and an electrolyte layer disposed between the cathode and the anode. The electrolyte layer comprises a single phase solid solution of a base material and an electrolyte dopant, wherein the base material comprises not greater than 12 mol % Y₂O₃ in ZrO₂, and the electrolyte dopant comprises Mn in an amount of not greater than 6.0 mol%.

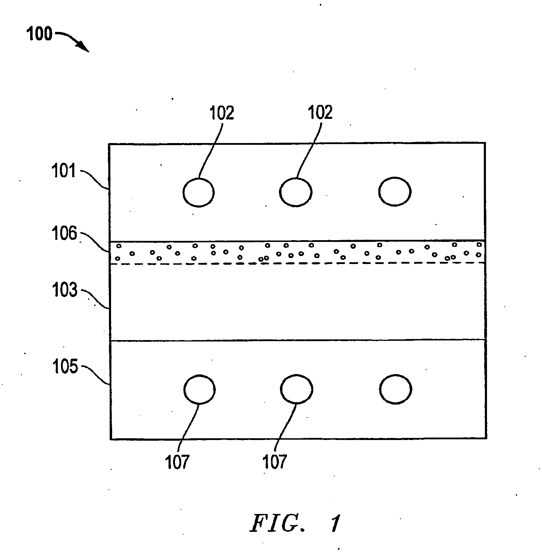

Referring to FIG. 1, a cross-sectional view of a fuel cell component is illustrated having a cathode 101, electrolyte 103, an electrolyte dopant layer 106, and an anode 105. Referring to the anode 105 of the SOFC, the anode 105 is the electrode that facilitates oxidation of the fuel in the redox reaction that generates a current within the SOFC device. The anode 105 is referred to as the fuel electrode since it typically transports a fuel gas, such as hydrogen (H₂), through the anode material to the anode/electrolyte interface where the oxidation reaction occurs. The fuel gas can be supplied to the anode 105 via channels 107. The channels 107 are typically positioned in close proximity to the anode to provide effective transport of the fuel gas from the channels 107, through the anode material, and ultimately to the anode/electrolyte boundary. Additionally, a high volume of porosity in the anode 105 aids rapid transport of the fuel gas to the anode/electrolyte interface for oxidation. According to one embodiment, the percent porosity of the anode is not less than about 5.0 vol.% of the total volume of the anode 105. According to another embodiment, the percent porosity of the anode 105 is not less than about 15 5 vol.%, such as not less than about 20 vol.%, 30 vol.%, or even not less than about 40 vol.%. Still, the percent porosity of the anode 105 is particularly within a range of between about 15 vol.% and 40 vol.%.

According to one embodiment, the anode 105 comprises a cermet material, that is, a two-phase combination of a ceramic and metallic material. For example, the anode 105 may include nickel and yttria-stabilized zirconia or nickel and gadolinium oxide-stabilized ceria. The nickel is generally produced through the reduction of nickel oxide included in the anode precursor, such as a green ceramic composition that is heat-treated.

Referring to the cathode 101, the cathode 101 facilitates the reduction of oxygen for the redox reaction within the SOFC. Similar to the anode 105, the cathode 101 is a porous material for facilitating the flow of gas, which aids the transport of an oxygen-rich gas through the cathode material to the cathode/electrolyte interface to fuel the reduction reaction. Typically, the gas flowing through the cathode 101 includes oxygen, such air or another oxygen-rich gas. Generally, the oxygen-rich gas is supplied to the cathode 101 via channels 102. The position of the channels 102 relative to the cathode 105 may vary depending upon the type of delivery system. Typically, the channels 102 are positioned within close proximity to the cathode to provide effective transport of the oxygen-rich gas from the channels 102, through the porous cathode material, and ultimately to the cathode/electrolyte interface. Additionally, a high volume of porosity in the cathode 101 aids rapid transport of the fuel gas to the anode/electrolyte interface for oxidation. According, to one embodiment as illustrated in FIG. 1, the channels 102 are incorporated within the cathode 101. According to one embodiment, the percent porosity of the cathode 101 is not less than about 5.0vol% of the total volume of the cathode 101. In another embodiment, the percent porosity of the cathode 101 is greater, such as not less than about 15 vol.%, 20 vol%, 30 vol%, or still not less than about 40 vol.%. Still, the percent porosity of the anode 105 is particularly within a range of between about 15 vol.% and 40 vol.%.

As stated previously, the cathode 101 may be made of a lanthanum manganate material having a general composition of, (La₁₋ₓAₓ)_{y}MnO_{3-δ},wherein y is less than 1.0. Particularly, the cathode 101 can be made of a lanthanum manganate material including a substituted species, giving the cathode composition a perovskite type crystal structure where the La is partially substituted by "A" on the A-sites of the perovskite crystal structure. According to one embodiment, A includes a divalent cation species, for example elements such as Mg, Ba, Sr, Ca, Co, Ga, Pb, and Zr As such, according to a particular embodiment, the substituted species, A is Sr, and the cathode material is a lanthanum strontium manganate material, referred to herein as LSM.

Referring to the stoichiometry of the lanthanum manganate cathode material, according to one embodiment, parameters such as, the type of atoms present, the percentage of vacancies within the crystal structure, and the ratio of atoms within the cathode material affect the rate of formation of conductivity-limiting compositions at the cathode/electrolyte interface during the operation of the fuel cell. The formation of conductivity-limiting compositions reduces the efficiency and operable lifetime of the SOFC.

As previously described, in one aspect, the composition of the lanthanum manganate cathode is (La₁₋ₓAₓ)_{y}MnO_{3-δ}, wherein y is less than 1.0, x is not greater than 0.5, and the ratio of La/Mn is less than 1.0. The value of y in the general formula (La₁₋ₓAₓ)_{y}MnO_{3-δ} represents the percent occupancy of atoms on the A-site within the crystal lattice. Thought of another way, the value of y may also be subtracted from 1.0 and represents the percentage of vacancies on the A-site within the crystal lattice. The cathode compositions provided herein includes a substituted lanthanum manganate material having a value of y less than 1.0, or in other words, an "A-site deficient" structure, since the A-sites within the crystal structure are not 100% occupied. According to one embodiment, y is not greater than 0.95, such as not greater than 0.90, 0.88, or even not greater than 0.85. In a particular embodiment, the cathode 101 is LSM (the cathode substitutional "A" component is Sr) having a composition of (La₁₋ₓSrₓ)_{y}MnO_{3-δ}, where y is less than 1.0, such as not greater than 0.95, 0.90 or even not greater than 0.85, and particularly within a range of between 0.70 and 0.99. The cathode 101, as described in accordance with the previous embodiments, is suitable for reducing the rate of formation of conductivity-limiting compositions and extending the operable lifetime of the SOFC.

The stoichiometry of the cathode composition is further defined by the value of x. The value of x within the substituted lanthanum manganate composition represents the amount of the substituted species (A) within structure. According to one embodiment, x is not greater than 0.5, such as not greater than 0.4 or 0.3. Still, the concentration of A provided within the cathode 101 may be less, such that x is not greater than 0.2, or still, not greater than 0.1, and particularly within a range of between 0.4 and 0.05. As previously discussed, according to a particular embodiment, A may be Sr such that the cathode composition is (La₁₋ₓSrₓ)_{y}MnO_{3-δ}, (LSM) where x is not greater than 0.5, such as not greater than 0.4, 0.3, 0.2 or even not greater than 0.1.

In further reference to the lanthanum manganate cathode material, the ratio of La/Mn in the cathode 101 is generally altered by the reduction of La within the cathode material, such as by providing a substitutional species (the value of x in the general formula) as well as the creation of A-site vacancies (related to the value of y) within the lanthanum manganate crystal structure. According to one embodiment, the ratio of La/Mn is less than 1.0, such as not greater than 0.97, 0.95, or even not greater than 0.93. According to a particular embodiment, the cathode 101 is LSM (substitution species is Sr) having a general composition of (La₁₋ₓSrₓ)_{y}MnO_{3-δ}, wherein x is not greater than 0.5, y is not greater than 1.0 and the ratio of La/Mn is less than 1.0. Accordingly, the ratio of La/Mn within the LSM cathode may be less, such as not greater than 0.97, 0.95 or even not greater than 0.90. Generally, a ratio of L:a/Mn less than 1.0, provides a suitable stoichiometric condition that reduces the formation of conductivity-limiting compositions and improves the operable lifetime of the SOFC.

Referring to the electrolyte layer 103, the electrolyte layer 103 is disposed between the anode 105 and cathode 101. Suitable materials for the electrolyte layer 103 include zirconia, ceria, gallia, and other known ionic conductors. Oxygen ion conductivity is enhanced with oxide stabilizer materials such as yttrium, scandium, samarium, ytterbium and gadolinium. Suitable stabilizing materials include oxides such as TiO_{2,} CeO₂, CaO, Y₂O₃, MgO, Sc₂O₃, In₂O₃, and SnO₂. For example, the electrolyte layer 103 may be formed from yttria-stabilized zirconia, scandia-doped zirconia, ytterbia-doped zirconia, samarium oxide-doped ceria, gadolinium oxide-doped ceria, or calcia-doped ceria, among others.

According to the present invention, the electrolyte layer 103 comprises not greater than 12 mol% yttria stabilizer within a zirconia matrix. According to an embodiment, the electrolyte layer 103 comprises not greater than 10 mol.% yttria, such as not greater than 8.0mol% or even 6.0mol% yttria stabilized in the zirconia matrix.

The electrolyte layer 103 further includes an electrolyte dopant 106. Provision of an electrolyte dopant 106 aids in improving the lifetime of SOFC by inhibiting the migration of species from the cathode to the cathode/electrolyte interface which results in the decomposition of the electrode. Additionally, the provision of the electrolyte dopant 106 reduces the formation of conductivity limiting compositions at the cathode/electrolyte interface, thereby extending the lifetime of the SOFC.

The effects of substitutional species in electrodes have been investigated in search of a means for improving conductivity. For example, in the context of mixed ionic-electronic electrode compositions (in contrast to an SOFC electrolyte layers), YSZ and was doped with Mn (or an Mn containing species) to investigate the solubility limit of Mn containing species within YSZ and the effects of Mn on the conductivity of the YSZ electrode. In particular, this investigation teaches that the formation of a two-phase composition of Mn and YSZ improves the total conductivity of the YSZ electrode composition due to an increase in the electronic conductivity in contrast to ionic conduction (the primary form of conduction in an SOFC electrolyte layer). See, Kim and Choi, "Mixed ionic and electronic conductivity of [(ZrO2)0.92(Y2O3)0.08]1-y (MnO1.5)y" Solid State Ionics, Elsevier (2000), available at www.elsevier.com/locate/ssi. Other references have developed use of a metal dopant species in an SOFC cathode (i.e., not an electrolyte layer) to increase oxygen-site vacancies and improve oxygen ion conductivity. See, for example, U.S. Patent Nos. 6,521,202 and 6,821,498. Additionally, other references have described the use of a dopant in the electrolyte layer, and particularly disclose the use of titanium or terbia in the electrolyte to produce a n-type or p-type mixed-conduction region within the electrolyte layer to improve conductivity. See, for example, U.S. Patent No. 5,518,830. However, such references are focused on improving the conductivity of the electrode or electrolyte, and do not address inhibiting the decomposition of the electrode material by reducing the migration of species to the cathode/electrolyte interface, particularly in the context of a fuel cell having an A-site deficient cathode material and an electrolyte dopant according to particular embodiments herein.

As previously described, the electrolyte dopant 106 includes manganese.
According to a particular embodiment, the electrolyte dopant 106 includes a cation species, i.e. Mn. Additionally, the electrolyte dopant 106 may be combined with an oxide to form oxide-containing species, for example, Mn₂O₃, or Mn₃O₄. Generally, the electrolyte dopant 106 is provided in a concentration such that the electrolyte layer is a solid solution.
The electrolyte layer 103 is a single phase solid solution comprising the electrolyte dopant 106 and the base material. Accordingly, the concentration of the electrolyte dopant 106 within the electrolyte layer 103 is not greater than 6.0 mol%, such as not greater than 5.0 mol%, for example 4.0 mol%, or even 3.0 mol%. Still, the concentration of electrolyte dopant 106 may be less, such as 2.0 mol%, or even 1.0 mol%. The concentration of electrolyte dopant 106 within the electrolyte layer 103 is balanced such that, in conjunction with the above-disclosed compositions of the cathode material, the rate of migration of species within the cathode to the cathode/electrolyte interface is reduced thereby improving the lifetime of the SOFC.

Accordingly, the provision of an Mn containing species as the electrolyte dopant 106 in the electrolyte layer 103 reduces the rate of diffusion of Mn from the electrode (i.e., the cathode) and reduces the rate of diffusion of subsequent species from the electrode to the electrode/electrolyte interface during operation of the SOFC. According to one embodiment, Mn diffuses into the electrolyte layer 103 from the cathode at a rate of not greater than 5x10⁻¹⁴ m²/s during operation of the fuel cell component. According to another embodiment, the rate of diffusion of Mn into the electrolyte form the cathode is not greater than 1x10⁻¹⁵ m²/s or even 1.0x10⁻¹⁶m²/s during operation of the fuel cell component.

According to a particular embodiment, illustrated in FIG. 1, the electrolyte dopant 106 is provided at a surface of the electrolyte layer 103 adjacent the cathode 101. According to one embodiment, the electrolyte dopant 106 is provided in the electrolyte layer 103 such that the electrolyte dopant 106 extends a distance into the electrolyte layer 103 not greater than 5.0 microns. According to another embodiment, the electrolyte dopant 106 extends a distance not greater than 4.0 microns into the electrolyte layer 103, such as not greater than 3.0 microns, 2.5 microns, or even not greater than 2.0 microns.

The electrolyte dopant 106 may be provided in the electrolyte layer 103 by various methods, such as deposition, printing techniques, plating techniques, or film growth techniques. Alternatively, the cation species may be provided at the surface of the electrolyte layer 103 via ion implantation or other chemical implant techniques, or a combination of techniques, such as, for example a deposition and a thermal anneal. Still, the formation of a layer of electrolyte dopant 106 at the surface of the electrolyte layer 106 may be formed during formation of the electrolyte layer 103.

According to another embodiment, the transference number of the electrolyte layer 103 including the electrolyte dopant 106 is not less than 1.0. The transference number is a measure of the primary mechanism of conduction within the electrolyte layer, that is, ionic or electronic. A transference number greater than or equal to 1.0 indicates that the primary mechanism of conduction within the electrolyte layer 103 is ionic conductivity. In accordance with the embodiments above, the electrolyte dopant 106 can be provided within the electrolyte layer 103 such that ionic conductivity is the primary conduction mechanism and the transference number is not less than 1.0, which may not necessarily enhance or maximize the total conductivity.

Additionally, the electrolyte dopant 106 within the electrolyte layer 103 in conjunction with the particular compositions of the cathode, inhibits the formation of conductivity-limiting compositions at the interface of the cathode 101 and the electrolyte 105. According to one embodiment, the rate of formation of conductivity limiting compositions is reduced by not less than 20% during the first 10,000 hours of operation of a fuel cell having the electrolyte dopant, in comparison to a fuel cell component without the electrolyte dopant. Still, the rate of formation of such conductivity limiting compositions may be further reduced, such as by not less than 30%, 40%, or even 50% during the first 10,000 hours of operation. According to another embodiment, the formation of conductivity limiting compositions is reduced by a rate of not less than one order of magnitude during operation of the fuel cell at 1000°C in comparison to fuel cells that do not include the dopant electrolyte 106. For example, the formation of conductivity limiting compositions is reduced by a rate of not less than 1.5 orders of magnitude, such as not less than 2.0 orders of magnitude.

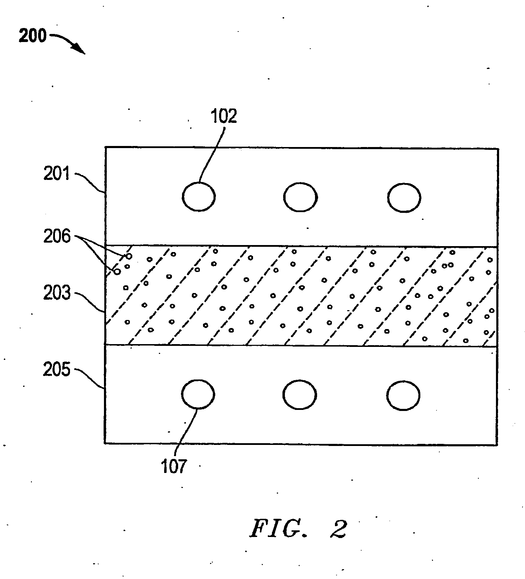

Referring to FIG. 2 and according to another embodiment, an electrolyte dopant 206 is dispersed throughout or substantially throughout an electrolyte layer 203, as illustrated in FIG. 2. According to one embodiment, the concentration of electrolyte dopant 206 in the electrolyte layer 103 is not greater than 6.0mol%, such as not greater than 5.0 mol%, 4.0 mol% or even 3.0 mol%. Still, the concentration of electrolyte dopant 206 throughout the electrolyte layer 102 can be less, such as not greater than 2.0 mol% or even 1.0 mol%.

According to another embodiment, a fuel cell stack can be made which incorporates multiple fuel cells. Each fuel cell of the fuel cell stack has a cathode comprising the previously discussed A-site deficient, doped lanthanum manganate material and an anode, as well as an electrolyte layer disposed between the cathode and the anode and comprising an electrolyte dopant material.

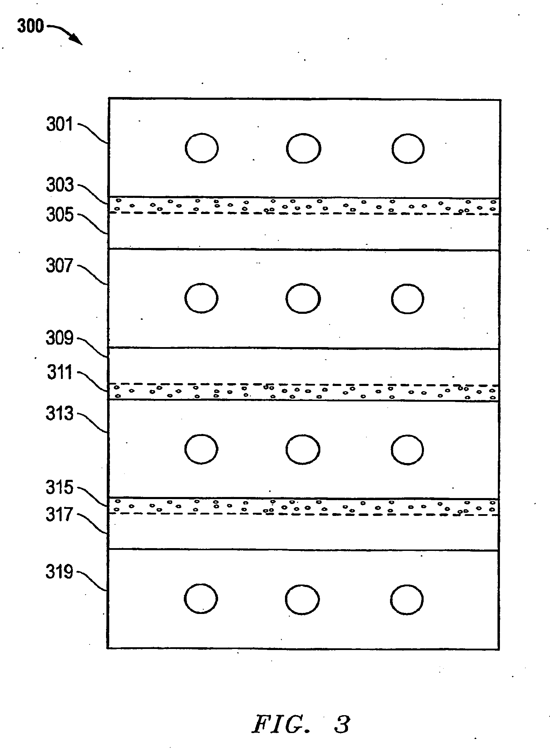

FIG. 3 illustrates a fuel cell stack having a plurality of fuel cells in accordance with embodiments provided herein. According to one embodiment, the combination of fuel cells facilitates the sharing of electrodes, such as the anode and the cathode between individual fuel cells. The stack includes electrode layers 301, 307, 313 and 319 separated by electrolyte layers 305, 309 and 317. As described in accordance with previous embodiments, each electrolyte layer includes an electrolyte dopant, which can be provided near a surface of an electrolyte layer or substantially throughout an electrolyte layer. For the purposes of illustration in FIG. 3, the electrolyte dopant of layers 303, 311 and 315 is illustrated as a surface layer or interfacial region within the electrolyte layers adjacent the cathode layers, such as in contrast to species within the cathode layers.

In one particular embodiment, electrode 301 is a cathode and electrode 307 is an anode with electrolyte layer 305 and an electrolyte dopant layer 303 adjacent the cathode 301 to form a single solid oxide fuel cell. It will be appreciated that another single solid oxide fuel cell is defined by electrode 307, which as stated previously is an anode, electrolyte layer 309, electrolyte dopant layer 311, and electrode 313, which is a cathode. As illustrated in the exemplary embodiment, each of the individual fuel cells shares an electrode, for example electrode 307 supplies gas to electrolyte layers 305 and 309. Additionally, electrode 313, which according to the illustrated embodiment is a cathode, supplies oxygen-rich gas to electrolyte layer 309 and 317. The stack may be arranged in a repeating pattern so that several electrodes are shared among adjacent solid oxide fuel cells. This configuration removes reliance upon use of gas-impermeable interconnect barriers, and is generally an electronically parallel design. However, the stack may alternatively be formed with gas impermeable interconnects. In this configuration, the arrangement of cells lends itself to a series circuit configuration of a solid oxide fuel cell stack. The stack may be connected to other stacks in a series, parallel or hybrid series/parallel circuit configuration.

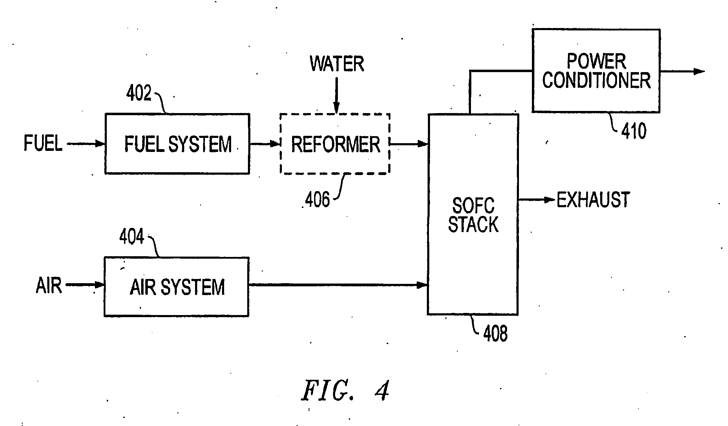

The solid oxide fuel cells described above may be incorporated into a SOFC system for producing power. FIG. 4 depicts an exemplary SOFC system. The system includes a fuel system 402, an air system 404, a SOFC stack 408, and a power conditioner 410. The system may also include a reformer 406 depending on the expected operating temperature of the SOFC stack.

Fuel enters the fuel system 402. The fuel system 402 may clean the fuel and/or heat the fuel in preparation for reforming or reaction. The fuel system 402 may include heat exchangers, compressors, pumps, absorption beds, and other components. From the fuel system 402, the fuel enters a reformer 406. The reformer 406 may use the fuel to produce hydrogen and other molecules. The reformer 406 is typically used for low temperature SOFC systems. High temperature SOFC systems may have the advantage of internal reforming and thus utilize unreformed fuel.

In this particular embodiment, the oxygen-rich gas is air, which enters the system through the air system 404. The air system 404 may clean, compress, purify, and/or heat the air. The air system may include compressors, absorption beds, membranes, and heat exchangers, among other components.

The fuel and air are directed to the SOFC stack 408. The fuel is typically directed across the anodes of the fuel cells in the SOFC stack and the air is typically directed across the cathodes. In the case of SOFCs, oxygen ion transport across the electrolyte from the cathode to the anode produces an electric potential. This electric potential is conditioned with a power conditioner 410 that is electrically coupled to the SOFC stack 408. The power conditioner 410 may deliver power to a grid or circuitry. Exhaust from the SOFC stack may be used for heat exchange or in the reformation process.

## Claims

1. A fuel cell component comprising:
a cathode comprising a ceramic material, the ceramic material having an A-site deficient, perovskite crystal structure and comprising manganese;
an anode; and
an electrolyte layer disposed between the cathode and the anode, the electrolyte layer comprising a single phase solid solution of a base material and an electrolyte dopant, wherein the base material comprises not greater than 12 mol% Y₂O₃ in ZrO₂, and the electrolyte dopant comprises Mn in an amount of not greater than 6.0 mol%.

2. The fuel cell component of claim 1, wherein Mn diffuses from the cathode into the electrolyte layer at a rate not greater than 5x10⁻¹⁴ m²/s during operation of the fuel cell at 1000°C.

3. The fuel cell component of claim 1, wherein the electrolyte dopant is present at a surface of the electrolyte layer adjacent the cathode and extends a distance into the electrolyte layer not greater than 5.0 microns.

4. The fuel cell component of claim 1, wherein the electrolyte layer has a transference number not less than 1.0.

5. The fuel cell component of claim 1, wherein the formation of conductivity limiting compositions at the interface of the electrolyte layer and the cathode is reduced by not less than one order of magnitude during operation of the fuel cell at 1000°C as compared to a fuel cell component without the electrolyte dopant.

6. The fuel cell component of claim 1, wherein the rate of formation of conductivity limiting compositions at the interface of the electrolyte layer and the cathode is reduced by not less than 20% during the first 10,000 hours of operation in comparison to a fuel cell component without the electrolyte dopant.

7. The fuel cell component of claim 1, wherein the electrolyte dopant extends throughout the entire electrolyte layer.

8. The fuel cell component of claim 1, wherein the cathode composition is (La₁₋ₓSrₓ)_{y}MnO₃, wherein y is less than 1.0, x is not greater than 0.5, and the ratio of La/Mn is less than 1.0.

9. The fuel cell component of claim 1, wherein the anode is a cermet comprising a ceramic phase and a metal phase.

10. A fuel cell system comprising:
a fuel system for conditioning fuel;
an air system for conditioning air;
a solid oxide fuel cell stack connected to the fuel system and connected to the air system, the solid oxide fuel cell stack having a plurality of solid oxide fuel cells, each solid oxide fuel cell of the plurality of solid oxide fuel cells comprising the fuel cell component of claim 1; and
a power conditioner electrically coupled to the solid oxide fuel cell stack.

## Patentansprüche

1. Brennstoffzellenelement mit:
Einer Kathode, welche ein keramisches Material enthält, wobei das keramische Material einen A-Stellenmangel und eine Perovskit-Kristallstruktur aufweist und
Mangan enthält;
einer Anode; und
einer zwischen der Kathode und der Anode angeordneten Elektrolytschicht, wobei die Elektrolytschicht eine feste Einzelphasenlösung eines Basismaterials und ein Elektrolytdotiermittel enthält, wobei das Basismaterial nicht mehr als 12 Mol-% Y₂O₃ in ZrO₂ enthält und das Elektrolytdotiermittel Mn in einer Menge von nicht mehr als 6,0 Mol-% aufweist.

2. Brennstoffzellenelement nach Anspruch 1, wobei beim Betrieb der Brennstoffzelle bei 1000°C Mn mit einer Rate von nicht mehr als 5 x 10⁻¹⁴ m²/s aus der Kathode in die Elektrolytschicht diffundiert.

3. Brennstoffzellenelement nach Anspruch 1, wobei das Elektrolytdotiermittel auf der Oberfläche der Elektrolytschicht benachbart der Kathode vorhanden ist und sich in die Elektrolytschicht über eine Entfernung von nicht mehr als 5 Mikrometer erstreckt.

4. Brennstoffzellenelement nach Anspruch 1, wobei die Elektrolytschicht eine Übertragungszahl von nicht weniger als 1,0 aufweist.

5. Brennstoffzellenelement nach Anspruch 1, wobei die Bildung von leitfähigkeitsbeschränkenden Zusammensetzungen an der Schnittstelle der Elektrolytschicht und der Kathode während des Betriebs der Brennstoffzelle bei 1000°C um nicht weniger als eine Größenordnung verglichen mit einem Brennstoffzellenelement ohne Elektrolytdotiermittel reduziert ist.

6. Brennstoffzellenelement nach Anspruch 1, wobei die Rate der Bildung von leitfähigkeitsbeschränkenden Zusammensetzungen an der Schnittstelle der Elektrolytschicht und der Kathode während der ersten 10000 Betriebsstunden um nicht weniger als 20 % verglichen mit einem Brennstoffzellenelement ohne Elektrolytdotiermittel reduziert ist.

7. Brennstoffzellenelement nach Anspruch 1, wobei sich das Elektrolytdotiermittel durch die gesamte Elektrolytschicht erstreckt.

8. Brennstoffzellenelement nach Anspruch 1, wobei die Kathodenzusammensetzung (La₁₋ₓSrₓ)_{y}MnO₃ ist, wobei y kleiner als 1,0 ist, x nicht größer als 0,5 ist, und das Verhältnis von La/Mn nicht kleiner als 1,0 ist.

9. Brennstoffzellenelement nach Anspruch 1, wobei die Anode ein Cermet ist, das eine keramische Phase und eine metallische Phase enthält.

10. Brennstoffzellensystem mit:
Einem Brennstoffsystem zum Behandeln von Brennstoff;
einem Luftsystem zum Behandeln von Luft;
einem mit dem Brennstoffzellensystem und dem Luftsystem verbundenen Feststoffoxidbrennstoffzellenstapel, wobei der Feststoffoxidbrennstoffzellenstapel eine Vielzahl von Feststoffoxidbrennstoffzellen aufweist, wobei jede Feststoffoxidbrennstoffzelle der Vielzahl von Feststoffoxidbrennstoffzellen ein Brennstoffzellenelement nach Anspruch 1 enthält; und
einem Power Conditioner, der elektrisch mit dem Feststoffoxidbrennstoffzellenstapel verbunden ist.

## Revendications

1. Composant de pile à combustible comprenant :
une cathode comprenant un matériau céramique, le matériau céramique ayant une structure de cristal de perovskite ayant une déficience au site A et comprenant du manganèse ;
une anode ; et
une couche d'électrolyte disposée entre la cathode et l'anode, la couche d'électrolyte comprenant une solution en phase solide unique d'un matériau de base et un dopant pour électrolyte, le matériau de base ne comprenant pas plus de 12 % en moles de Y₂O₃ dans ZrO₂, et le dopant pour électrolyte comprenant du Mn en une quantité n'excédant pas 6,0 % en moles.

2. Composant de pile à combustible selon la revendication 1, dans lequel Mn diffuse depuis la cathode dans la couche d'électrolyte à une vitesse qui n'excède pas 5x10⁻¹⁴ m²/s au cours du fonctionnement de la pile à combustible à 1000°C.

3. Composant de pile à combustible selon la revendication 1, dans lequel le dopant pour électrolyte est présent au niveau d'une surface de la couche d'électrolyte adjacente à la cathode et s'étend, dans la couche d'électrolyte, sur une distance qui n'excède pas 5,0 microns.

4. Composant de pile à combustible selon la revendication 1, dans lequel la couche d'électrolyte a un nombre de transport au cours des premières 10 000 heures de fonctionnement qui n'est pas inférieur à 1,0.

5. Composant de pile à combustible selon la revendication 1., dans lequel la formation de compositions limitant la conductivité à l'interface entre la couche d'électrolyte et la cathode, au cours du fonctionnement de la pile à combustible à 1000°C, est réduite au moins d'un ordre de grandeur par comparaison avec un composant de pile à combustible dépourvu de dopant pour électrolyte.

6. Composant de pile à combustible selon la revendication 1, dans lequel la vitesse de formation de compositions limitant la conductivité à l'interface entre la couche d'électrolyte et la cathode, au cours des premières 10 000 heures de fonctionnement, est réduite au moins de 20 % par comparaison avec un composant de pile à combustible dépourvu de dopant pour électrolyte.

7. Composant de pile à combustible selon la revendication 1, dans lequel le dopant pour électrolyte s'étend au travers de toute la couche d'électrolyte.

8. Composant de pile à combustible selon la revendication 1, dans lequel la composition de la cathode est (La₁₋ₓSrₓ)_{y}MnO_{3,} où y est inférieur à 1,0, x n'est pas supérieur à 0,5 et le rapport La/Mn est inférieur à 1,0.

9. Composant de pile à combustible selon la revendication 1, dans lequel l'anode est un cermet comprenant une phase céramique et une phase métallique.

10. Système de pile à combustible comprenant :
un système de combustible pour alimenter en combustible ;
un système d'air pour alimenter en air ;
un empilement de piles à combustible à oxyde solide connecté au système de combustible et connecté au système d'air, l'empilement de piles à combustible à oxyde solide ayant une pluralité de piles à combustible à oxyde solide, chaque pile à combustible à oxyde solide de la pluralité de piles à combustible à oxyde solide comprenant le composant de pile à combustible selon la revendication 1 ; et
une alimentation en énergie couplée électriquement à l'empilement de piles à combustible à oxyde solide.
